# EUROPÄISCHE PATENTSCHRIFT

(11) **EP 3 075 246 B1**
(45) Veröffentlichungstag und Bekanntmachung des Hinweises auf die Patenterteilung: **24.08.2022**
(21) Anmeldenummer: 16161889.7
(22) Anmeldetag: 23.03.2016
(51) Int. Cl.: A01M 7/00, A01B 63/10, A01C 23/00

(54) **LANDWIRTSCHAFTLICHE MASCHINE UND SICHERHEITSVERFAHREN**
AGRICULTURAL MACHINE AND SECURITY METHOD
MACHINE AGRICOLE ET PROCEDE DE SECURITE

(30) Priorität: 27.03.2015 DE 102015104690
(43) Veröffentlichungstag der Anmeldung: 05.10.2016
(73) Patentinhaber: Amazonen-Werke H. Dreyer SE & Co. KG, 49205 Hasbergen (DE); HYDAC Systems & Services GmbH, 66280 Sulzbach (DE)
(72) Erfinder: GROßE PRUES, Frank, 49434 Neuenkirchen-Vörden (DE); KOMMA, Georg, 66386 Sankt Ingbert (DE); KRUPP, Patrick, 66540 Neunkirchen (DE); KIEFER, Timo, 66740 Saarlouis (DE)
(74) Vertreter: Grünecker Patent- und Rechtsanwälte PartG mbB

(56) Entgegenhaltungen:
- EP-A1- 1 444 894
- EP-A1- 2 559 332
- FR-A1- 2 996 412
- US-A1- 2009 173 802
- US-A1- 2014 197 297

## Beschreibung

Die Erfindung betrifft eine landwirtschaftliche Maschine mit den Merkmalen des Oberbegriffs des Anspruchs 1 und 10 sowie ein Sicherheitsverfahren für den Betrieb einer landwirtschaftlichen Maschine. Eine derartige Maschine ist beispielsweise aus EP 1 444 894 A1 oder EP 2 559 332 A1 bekannt.

Solche landwirtschaftlichen Maschinen, auch Feldspritzen genannt, kommen beispielsweise zum Ausbringen von Flüssigdüngemittel oder Pestiziden zum Einsatz. Um die Flüssigkeiten über eine möglichst große Arbeitsbreite auf dem Feld auszubringen, weisen Feldspritzen einen Ausleger auf, der über 20 m breit sein kann. Am Ausleger sind Sprühdüsen befestigt, die die Flüssigkeit auf den Boden sprühen. Für eine optimale Ausbringung der Flüssigkeit soll der Abstand zwischen dem Ausleger und dem Boden über die gesamte Auslegerbreite möglichst konstant bleiben. Dies ist problematisch, wenn die Feldspritze in unterschiedlich tiefen Spurrillen oder einseitig in einer Furche fährt. Die Parallelität zwischen Boden und Ausleger soll auch bei geneigten Böden einstellbar sein.

Die Neigungsverstellung des Auslegers erfolgt durch Hydraulikzylinder und Feder-Dämpfersystemen, die mit dem Ausleger verbunden sind. Beispielhaft wird auf FR 2 795 913 A1, EP 1 167 059 A1 und EP 0 922 385 A1 verwiesen. Als Messgrößen gehen bei den bekannten Regelungen der Abstand zwischen dem Ausleger und dem Boden und/oder der Relativwinkel zwischen dem Ausleger und dem Schlepper ein. Die bekannten Regelungen haben den Nachteil, dass diese ungenau sind und eine Echtzeitregelung nicht erlauben.

Deshalb weist die Feldspritze gemäß EP 1 444 894 A1 eine mehrgliedrige Aufhängung auf, bei der sowohl die Signale aus der Abstandsmessung zwischen Ausleger und Boden als auch Neigungssignale, die die Relativneigung zwischen dem Fahrzeug und dem Ausleger wiedergeben, in die Regelung eingehen. Der Ausleger ist an einem höhenverstellbaren Hubrahmen um eine in Fahrtrichtung weisende Drehachse drehbar gelagert. Ein drehbarer Zwischenrahmen ist koaxial zum Ausleger am Hubrahmen angebracht. Der Zwischenrahmen und der Ausleger sind durch zwei Zentrierfedern und einen Dämpfer miteinander gekoppelt. Zwischen dem Zwischenrahmen und dem Hubrahmen ist ein Hydraulikzylinder vorgesehen.

Zur Neigungsverstellung wird der Hydraulikzylinder ein- oder ausgefahren und verdreht den Zwischenrahmen gegenüber dem Hubrahmen. Dadurch wird eine beiden Zentrierfedern gelängt und die andere verkürzt. Die auf den Ausleger wirkende Federkraft zieht den Ausleger entsprechend der Bewegung des Zwischenrahmens nach, so dass dieser - bezogen auf den Zwischenrahmen - in der geneigten Endposition wieder zentriert ist. Die Zentrierfedern kompensieren überdies schnelle Relativbewegungen zwischen Fahrzeug und Ausleger, so dass der Ausleger im Betrieb lagestabil bleibt.

In die Neigungsregelung gehen einerseits die Signale aus der Bodenabstandsmessung zwischen dem Ausleger und dem Boden und andererseits ein Neigungssignal ein, das ein Maß für die auf den Ausleger wirkende Federkraft bildet. Damit kann der Hydraulikzylinder präzise angesteuert werden. Ein Übersteuern des Auslegers wird weitgehend vermieden.

Allerdings ist diese Neigungsregelung relativ langsam. Abhilfe schafft hier die landwirtschaftliche Maschine gemäß DE 10 2015 101 032 (nicht vorveröffentlicht), die auf die Anmelderin zurückgeht. Diese landwirtschaftliche Maschine weist einen Ausleger und einen Rahmen auf, an dem der Ausleger um eine in Fahrtrichtung weisende Drehachse drehbar befestigt ist. Die Maschine umfasst einen Stellzylinder zur Drehung des Auslegers um die Drehachse und ein Mess-und Regelungssystem für die Betätigung des Stellzylinders. Der Stellzylinder ist einerseits mit dem Rahmen mechanisch verbunden. Andererseits ist der Stellzylinder mit dem Ausleger mechanisch zur direkten Krafteinleitung verbunden. Der Stellzylinder ist als doppeltwirkender Stellzylinder mit einem Kolben ausgebildet, der beidseitig mit Druck zur Bewegung des Auslegers in entgegengesetzten Drehrichtungen beaufschlagbar ist. Der doppeltwirkende Stellzylinder ermöglicht eine schnelle und präzise Einstellung der Neigung des Auslegers. Allerdings kann ein Druckabfall zu einer Beeinträchtigung der Neigungsregelung führen.

Der Erfindung liegt die Aufgabe zu Grunde, eine landwirtschaftliche Maschine der eingangs genannten Art dahingehend zu verbessern, dass bei einem Druckabfall zumindest vorübergehend ein sicherer Betrieb der Maschine mit Blick auf die Neigungsregelung des Auslegers zumindest lange genug möglich ist, um eine Beschädigung des Auslegers zu vermeiden. Der Erfindung liegt ferner die Aufgabe zu Grunde, ein Sicherheitsverfahren für den Betrieb einer landwirtschaftlichen Maschine anzugeben.

Erfindungsgemäß wird diese Aufgabe durch die landwirtschaftliche Maschine mit den Merkmalen des Anspruchs 1 und alternativ durch den Gegenstand des Anspruchs 10 gelöst. Mit Blick auf das Verfahren wird die Aufgabe durch den Gegenstand des Anspruchs 11 gelöst.

Die Erfindung beruht auf dem Gedanken, eine landwirtschaftliche Maschine zum Ausbringen von Flüssigkeit oder pulver- oder granulatförmigen Materialien anzugeben, die einen Ausleger und einen Rahmen, an dem der Ausleger um eine in Fahrtrichtung weisende Drehachse drehbar befestigt ist, aufweist. Die Maschine weist wenigstens einen Hubzylinder zum Anheben und Absenken des Auslegers und/oder zum Anwinkeln und Abwinkeln eines Auslegersegmentes, einen Stellzylinder zur Drehung des Auslegers um die Drehachse und ein Mess-und Regelsystem für die Betätigung des Stellzylinders und des Hubzylinders auf. Der Stellzylinder ist einerseits mit dem Rahmen mechanisch verbunden oder mechanisch verbindbar und andererseits mit dem Ausleger zur direkten Krafteinleitung mechanisch verbunden. Der Stellzylinder ist als doppeltwirkender Stellzylinder mit einem Kolben ausgebildet, der beidseitig mit Druck zur Bewegung des Auslegers in entgegengesetzten Drehrichtungen beaufschlagbar ist. Der Stellzylinder und der Hubzylinder sind mit einem Hydraulikkreislauf, insbesondere einem offenen Hydraulikkreislauf, hydraulisch verbunden. Der Hydraulikkreislauf weist ein erstes Schaltorgan zum Ansteuern des Stellzylinders und wenigstens ein weiteres Schaltorgan, insbesondere ein zweites und drittes Schaltorgan, zum Ansteuern des Hubzylinders auf. Dabei kann es sich um ein einziges weiteres Schaltorgan oder um mehrere weitere Schaltorgane handeln, bspw. ein zweites und drittes Schaltorgan.

Das Mess- und Regelsystem ist mit den Schaltorganen verbunden und so programmiert, dass das weitere Schaltorgan den Durchfluss an Hydraulikflüssigkeit drosselt oder das weitere Schaltorgan geschlossen wird, wenn ein Grenzwert erreicht wird. Entsprechendes gilt bei mehreren weiteren Schaltorganen.

Die Erfindung hat den Vorteil, dass durch die Funktionseinschränkung bzw. Teilfunktionseinschränkung des Hubzylinders zumindest vorübergehend eine wesentlich größere Menge an Hydraulikflüssigkeit zur Verfügung steht, die für die Neigungsregelung verwendet wird. Damit kann bei einem Druckabfall im Hydraulikkreislauf, bspw. wenn die Pumpe weniger Hydraulikflüssigkeit liefert, als benötigt wird, weiterhin die Neigung des Auslegers eingestellt werden, um eine Beschädigung der Maschine zu vermeiden. Es genügt, wenn die Neigungsregelung so lange weiterarbeitet, bis der Bediener der Maschine auf die Fehlfunktion aufmerksam gemacht wird oder die Maschine automatisch abgeschaltet wird oder anderweitige Schutzmaßnahmen getroffen werden oder die Pumpe wieder genügend Öl für den parallelen Betrieb der Hub- und Neigungsachse liefert.

Im Sicherheitsbetrieb oder Notbetrieb drosselt also das den Hubzylinder ansteuernde Schaltorgan die Menge an Hydraulikflüssigkeit, die zur Betätigung des Hubzylinders bereitgestellt wird. Die Menge an Hydraulikflüssigkeit ist im Vergleich zu der Menge an Hydraulikflüssigkeit, die im Normalbetrieb unter entsprechenden Bedingungen für die Betätigung des Hubzylinders benötigt werden, verringert. Der so zur Verfügung stehende Überschuss an Hydraulikflüssigkeit wird für den Betrieb des Stellzylinders, also für die Neigungsregelung verwendet.

Das entsprechende Schaltorgan kann auch geschlossen werden, so dass der Durchfluss gesperrt ist und keine Hydraulikflüssigkeit durch das Schaltorgan strömt.

Die entsprechende Ansteuerung des Schaltorgans erfolgt in beiden Fällen durch das Mess- und Regelsystem, das so programmiert ist, dass bei Erreichen eines Grenzwertes das Schaltorgan entsprechend betätigt wird. Es gibt verschiedene Parameter, die für den Grenzwert herangezogen werden können. Allgemein soll ein Erreichen des Grenzwertes anzeigen, dass die zur Verfügung stehende hydraulische Leistung nicht ausreicht. Der Grenzwert kann bspw. ein Grenzdruck im Hydraulikkreislauf sein. Es gibt auch andere Möglichkeiten als über den Druck eine Unterversorgung zu detektieren. Bspw. kann der Schwenkwinkel einer Verstellpumpe erfasst werden. Weitere Parameter sind möglich, die eine Unterversorgung angeben.

Der Hubzylinder ist zum vertikalen Anheben und Absenken des Auslegers ausgebildet. Dabei können ein einziger oder mehrere Hubzylinder, bspw. 2 Hubzylinder vorgesehen sein. Alternativ ist der Hubzylinder zum Anwinkeln und Abwinkeln eines Auslegersegmentes ausgebildet, das in an sich bekannter Weise einen gelenkig gelagerten Abschnitt des Auslegers bildet. Üblicherweise sind beide Endabschnitte des Auslegers als anstellbare Auslegersegmente ausgebildet. Dabei können ebenfalls ein einziger oder mehrere Hubzylinder, bspw. 2 Hubzylinder vorgesehen sein.

Die Kombination eines oder mehrerer Hubzylinder zum vertikalen Anheben und Absenken des Auslegers und eines oder mehrerer Hubzylinder zum Anwinkeln und Abwinkeln eines Auslegersegmentes ist möglich.

Bevorzugte Ausführungsformen der Erfindung sind in den Unteransprüchen angegeben.

Vorzugsweise ist der Hubzylinder durch das zweite Schaltorgan zum Anheben des Auslegers und/oder Anwinkeln des Auslegersegmentes des Hubzylinders und durch das dritte Schaltorgan zum Absenken des Auslegers und/oder Abwinkeln des Auslegersegmentes des Hubzylinders ansteuerbar, wobei das Mess- und Regelsystem so programmiert ist, dass das dritte Schaltorgan den Durchfluss an Hydraulikflüssigkeit drosselt oder das dritte Schaltorgan geschlossen wird, wenn im Hydraulikkreislauf ein Grenzdruck unterschritten wird. Dies hat den Vorteil, dass nur eine Teilfunktion des Hubzylinders eingeschränkt wird bzw. entfällt, nämlich das Absenken und/oder Abwinkeln des Auslegers. Das Anheben und/oder Anwinkeln des Auslegers ist weiterhin möglich.

Dieser Ausführung liegt der allgemeine Gedanke zu Grunde, im Sicherheitsbetrieb nur eine Bewegung des Auslegers und/oder des Auslegersegementes nach unten, also in Richtung Boden, einzuschränken oder zu verhindern (d.h. nach unten Absenken und/oder nach unten Abwinkeln). Die Bewegung nach oben, d.h. vom Boden weg, wird weiterhin voll unterstützt, um im Notfall den Abstand zum Boden zu vergrößern (d.h. nach oben Anheben und/oder nach oben Anwinkeln). Damit wird der Sicherheitsbetrieb weiter verbessert.

Zweckmäßigerweise ist ein Rückschlagventil zwischen dem Hubzylinder und dem weiteren Schaltorgan angeordnet oder in das weitere Schaltorgan integriert. Das Rückschlagventil dient dazu, dass das Gestänge nicht unkontrolliert absinkt, wenn der Ausleger angehoben werden soll, aber nicht genügend Öl-Druck vorhanden ist oder die Öl-Versorgung komplett deaktiviert wurde. Bei der Verwendung des zweiten und dritten Schaltorgans kann das Rückschlagventil dem zweiten Schaltorgan in Strömungsrichtung vorgeordnet sein. Bei der Verwendung eines einzigen Schaltorgans kann das Rückschlagventil in das Schaltorgan integriert sein.

Vorzugsweise ist dem weiteren Schaltorgan, insbesondere dem zweiten Schaltorgan zum Anheben des Auslegers, ein Messumformer und/oder ein Hydraulikspeicher und/oder eine oder mehrere Hydraulikkomponenten, bspw. Drucksonden oder Drucksensoren, in Strömungsrichtung vorgeordnet. Der Messumformer gibt ein Signal aus, das dem Hydraulikdruck in der Druck- bzw. Pumpleitung entspricht. Damit kann erfasst werden, ob der Grenzdruck über- oder unterschritten wird. Der Hydraulikspeicher dient als Puffer und/oder als Energiespeicher, um schnelle Druckschwankungen zu kompensieren.

Der Stellzylinder kann mit dem Rahmen direkt verbunden oder mit dem Rahmen durch einen Zwischenrahmen verbindbar sein, der um eine in Fahrtrichtung weisende Drehachse drehbar und mit dem Rahmen verriegelbar ist. Wenn der Zwischenrahmen mit dem Rahmen verriegelt ist, werden Kräfte vom Stellzylinder in den Rahmen eingeleitet.

Bei einer weiteren bevorzugten Ausführungsform ist ein passives Feder-Dämpfersystem zur Drehung des Auslegers um die Drehachse als Sicherheitssystem vorgesehen, das bei Unterschreiten eines Grenzdruckes im Hydraulikkreislauf aktivierbar ist. Das passive Feder-Dämpfersystem fungiert als redundantes Sicherheitssystem, das aktiviert wird, wenn der Hydraulikkreislauf einschließlich des obigen hydraulischen Sicherheitskonzeptes ausfällt. Das passive Sicherheitssystem kann daher im Notbetrieb unabhängig vom Stellzylinder arbeiten. Es ist auch denkbar, dass das passive Sicherheitssystem im Notbetrieb als Unterstützung des Stellzylinders zusammen mit diesem arbeitet.

Dabei kann das passive Feder-Dämpfersystem den Zwischenrahmen und den Rahmen verbinden, wobei der Zwischenrahmen mit dem Rahmen verriegelbar und zum Aktivieren des Feder-Dämpfersystems entriegelbar ist. Im Normalbetrieb ist also der Zwischenrahmen verriegelt und nur der Stellzylinder ist für die Neigungsregelung wirksam. Im Sicherheitsbetrieb ist der Zwischenrahmen entriegelt und nur das passive Feder-Dämpfersystem ist wirksam. Der Stellzylinder ist dann inaktiv.

Vorzugsweise ist ein Betätigungselement zum Verriegeln und Entriegeln des Zwischenrahmens mit dem Hydraulikkreislauf oder einem separaten Hydraulikkreislauf hydraulisch verbunden, wobei der Hydraulikkreislauf oder der separate Hydraulikkreislauf ein viertes Schaltorgan zum Ansteuern des Betätigungselements aufweist. Das vierte Schaltorgan kann mit dem Mess- und Regelsystem verbunden sein, das so programmiert ist, dass bei Unterschreiten eines Grenzdruckes im Hydraulikkreislauf oder auf Grund eines anderen Auslösewertes das vierte Schaltorgan betätigt wird.

Ein Hydraulikspeicher und ein Rückschlagventil können auf der Druckseite des Betätigungselements angeordnet sein. Die im Hydraulikspeicher gespeicherte Energie wird zur Auslösung des Betätigungselementes verwendet, wenn der Druck im Hydraulikkreislauf nicht ausreicht.

Das passive Feder-Dämpfersystem kann also, wie oben beschrieben, zusätzlich zu oder alternativ unabhängig von dem hydraulischen Sicherheitskonzept verwendet werden. Der nebengeordnete Anspruch 10 betrifft die Anwendung des passiven Feder-Dämpfersystems unabhängig von dem hydraulischen Sicherheitskonzept.

Das erste, zweite, dritte und vierte Schaltorgan ist vorzugsweise jeweils ein Wegeventil.

Alternativ kann das erste Schaltorgan zwei Druckregelventile umfassen, die einerseits jeweils mit der Druckseite des Stellzylinders und andererseits jeweils alternativ mit der Hydraulikpumpe und einem Reservoir verbindbar sind.

Die Erfindung betrifft ferner ein Sicherheitsverfahren für den Betrieb einer landwirtschaftlichen Maschine zum Ausbringen von Flüssigkeit oder pulver- oder granulatförmigen Materialien mit einem Ausleger, einem Rahmen, an dem der Ausleger um eine in Fahrtrichtung weisende Drehachse drehbar befestigt ist, einem Stellzylinder zur Drehung des Auslegers um die Drehachse und wenigstens einem Hubzylinder zum Anheben und Absenken des Auslegers und/oder zum Anwinkeln und Abwinkeln eines Auslegersegmentes und einem Mess- und Regelsystem für die Betätigung des Stellzylinders und des Hubzylinders, bei dem der Hubzylinder mit einer gedrosselten Menge an Hydraulikflüssigkeit betrieben oder zumindest eine Teilfunktion des Hubzylinders deaktiviert wird, wenn im Hydraulikkreislauf ein Grenzdruck unterschritten wird.

Dabei kann die Absenkfunktion des Hubzylinders deaktiviert oder verlangsamt werden, wenn im Hydraulikkreislauf ein Grenzdruck unterschritten wird. Der Ausleger lässt sich dann nur anheben, nicht absenken oder zumindest nur langsam absenken, so dass ausreichend Druck zumindest vorübergehenden für die Neigungsverstellung bereitsteht. Dasselbe gilt für das Abwinkeln des Auslegersegmentes.

Allgemein gilt, dass mit "Anwinkeln" eine Schwenkbewegung des Auslegersegementes nach oben und mit "Abwinkeln" eine Schwenkbewegung des Auslegersegementes nach unten jeweils bezogen auf einen horizontalen Teil des Auslegers gemeint ist.

Die Erfindung wird mit weiteren Einzelheiten unter Bezug auf die beigefügten schematischen Zeichnungen näher erläutert. In diesen zeigen
Fig. 1 eine Draufsicht auf die Aufhängung des Auslegers am Rahmen einer Maschine nach einem erfindungsgemäßen Ausführungsbeispiel mit einem schematisch dargestellten Hydrauliksystem, bei dem der Stellzylinder mit dem Rahmen und dem Ausleger jeweils direkt verbunden ist;
Fig. 2 eine vereinfachte Ansicht des Hydrauliksystems einer Maschine nach einem erfindungsgemäßen Ausführungsbeispiel für die Hub - und Neigungsverstellung des Auslegers;
Fig. 3 eine vereinfachte Ansicht des Hydrauliksystems für die Ver- und Entriegelung des Zwischenrahmens;
Fig. 4 eine Vorderansicht der Aufhängung des Auslegers bei einer Maschine nach einem erfindungsgemäßen Ausführungsbeispiel; und
Fig. 5 eine vereinfachte Ansicht eines weiteren Hydrauliksystems für die Hubfunktion des Auslegers.

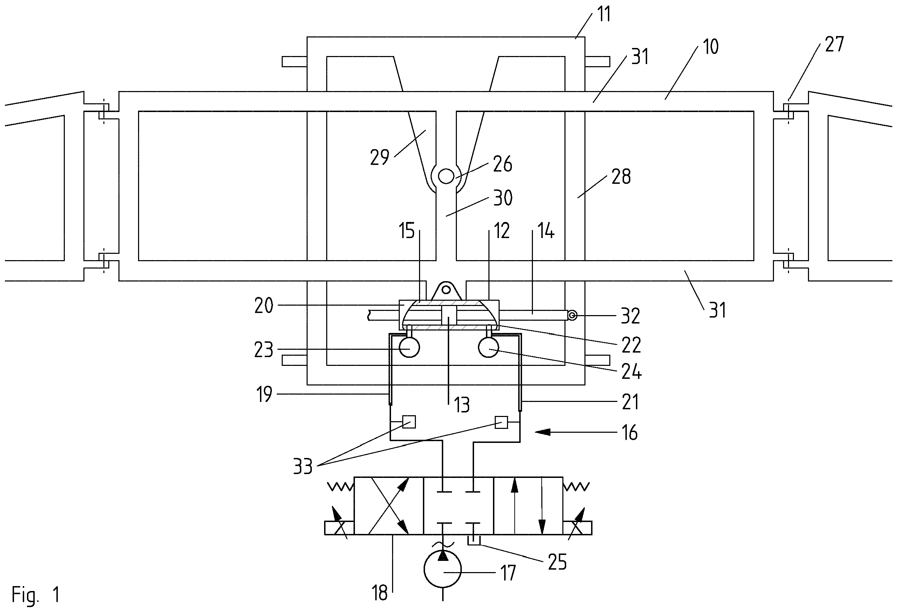

Der in Fig. 1 dargestellte schematische Ausschnitt zeigt einen Ausleger 10, der Teil einer landwirtschaftlichen Maschine, insbesondere einer Feldspritze, ist.

Derartige Feldspritzen können beispielsweise als Anhängefeldspritze oder als selbstfahrende Feldspritze ausgeführt sein. Die Feldspritze weist ein Fahrwerk auf, auf dem ein Tank mit einer entsprechenden Pumpe montiert ist (nicht dargestellt). Der Tank versorgt die am Ausleger unten angebrachten Düsen mit Flüssigkeit, die im Betrieb auf den Boden bzw. Pflanzen aufgesprüht wird. Der Ausleger selbst ist für den Straßenbetrieb klappbar ausgeführt. Derartige Feldspritzen sind an sich bekannt und werden nicht näher beschrieben.

Der in Fig. 1 dargestellte Rahmen ist drehfest mit dem Fahrwerk der Feldspritze verbunden. Der Rahmen 11 ist als höhenverstellbarer Hubrahmen ausgebildet.

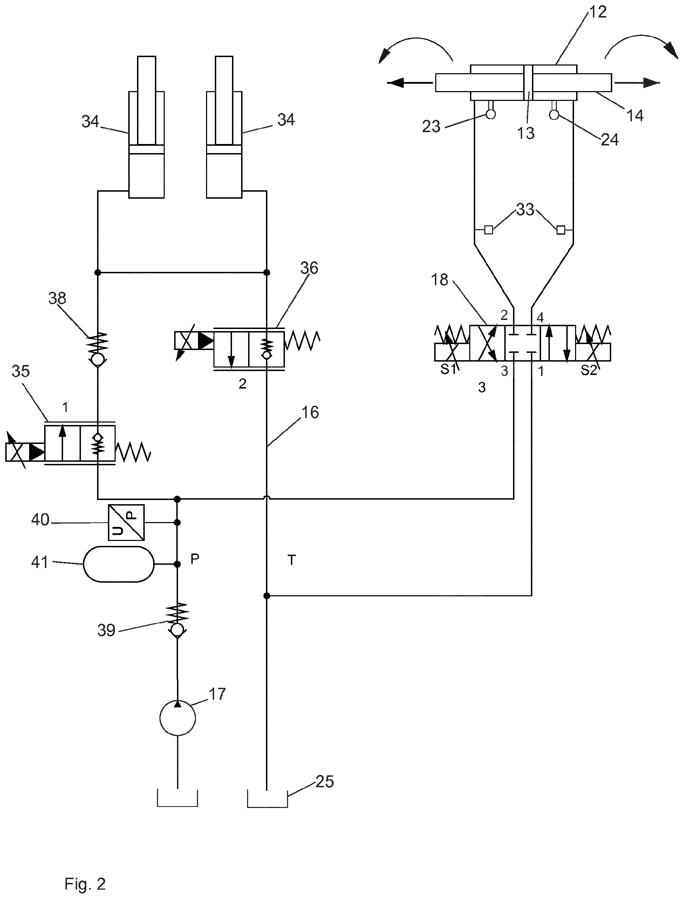

Die Hubzylinder 34 des Rahmens 11 können gemäß Fig. 2 ausgebildet sein.

Der Rahmen 11 bildet ein Traggestell mit mehreren Streben 28. Die Streben 28 sind in Fig. 1 in Form eines Rechtecks horizontal und vertikal angeordnet und miteinander verbunden und bieten eine stabile Aufhängung für den Ausleger 10. An der im Betrieb oberen horizontalen Strebe 28 ist ein nach unten vorstehender Vorsprung 29 vorgesehen, in dessen unterem Bereich ein Drehgelenk 26 vorgesehen ist. An dem Drehgelenk 26 ist der Ausleger 10 um eine in Fahrtrichtung weisende Drehachse drehbar gelagert. Andere Lagerungsmöglichkeiten für das Drehgelenk 26, beispielsweise eine Strebenanordnung, sind ebenso möglich, wie andere Rahmengeometrien.

Der Ausleger 10 ist in an sich bekannter Weise als stabiles Gestänge ausgebildet und weist mehrere Drehgelenke 27 zum Einklappen des Gestänges auf. In Fig. 1 sind nur der mittlere Teil sowie zwei angrenzende Gestänge-Segmente des Auslegers 10 dargestellt. Der Ausleger 10 weist eine Vertikalstrebe 30 auf, die zwei Horizontalstreben des Auslegers im Bereich des Rahmens 11 mittig verbindet. Das Drehgelenk 26 ist an der Vertikalstrebe 30 außermittig, konkret etwas oberhalb der Strebenmitte angeordnet. Andere Positionen (mittig oder unterhalb der Strebenmitte) sind auch denkbar.

Zur Einstellung der Neigung des Auslegers 10 ist ein Stellzylinder 12 sowie ein Mess- und Regelungssystem zur Betätigung des Stellzylinders 12 vorgesehen.

Der Stellzylinder 12 ist einerseits mit dem Rahmen 11 und andererseits mit dem Ausleger 10 mechanisch verbunden. Wie in Fig. 1 zu sehen, ist bei dem Ausführungsbeispiel der Stellzylinder 12 einerseits direkt mit dem Rahmen 11 und andererseits direkt mit dem Ausleger 10 mechanisch verbunden.

Unter einer direkten mechanischen Verbindung wird eine Verbindung verstanden, bei der eine direkte Krafteinleitung in den Ausleger 10 durch den Stellzylinder 12 möglich ist. Im Unterschied dazu erfolgt bei dem aus EP 1 444 894 A1 bekannten Stellsystem die Krafteinleitung indirekt, weil im Kraftfluss vom Stellzylinder auf den Ausleger die Zentrierfedern zwischengeschaltet sind. Dies ist bei dem Ausführungsbeispiel gemäß Fig. 1 nicht der Fall, bei dem die Kräfte unmittelbar in den Ausleger 10 eingeleitet werden.

Konkret ist der Stellzylinder 12 bei dem Ausführungsbeispiel gemäß Fig. 1 als doppeltwirkender Stellzylinder ausgebildet, der einen Kolben 13 in einem Gehäuse 15 des Stellzylinders 12 aufweist, der beidseitig mit Druck beaufschlagbar ist. Bei dem Stellzylinder 12 handelt es sich um einen Gleichlaufzylinder, bei dem die Hubvolumina auf beiden Seiten des Kolbens 13 im Wesentlichen gleich groß sind. Dazu sind auf beiden Seiten des Kolbens 13 Kolbenstangen 14 mit gleichen Durchmessern vorgesehen.

Eine der beiden Kolbenstangen 14 ist mit dem Rahmen 11 mechanisch verbunden. Die Verbindung ist gelenkig ausgebildet, um eine Drehung des Stellzylinders 12 um den Anlenkpunkt 32 zu ermöglichen. Mit anderen Worten dreht der Stellzylinder 12 bei Betätigung um eine durch den Anlenkpunkt 32 verlaufende, in Fahrtrichtung weisende Drehachse. Die andere Kolbenstange 14 endet frei.

Bei dem Ausführungsbeispiel gemäß Fig. 1 ist das Gehäuse 15 des Stellzylinders 12 direkt mit dem Ausleger 10, konkret mit der unteren der beiden Horizontalstreben 31 mechanisch verbunden. Auch hier handelt es sich um eine gelenkige Verbindung, die eine Drehung des Stellzylinders 12 um eine in Fahrtrichtung weisende Drehachse ermöglicht. Dadurch kann der Stellzylinder 12 seine in Fig. 1 dargestellte parallele Ausgangsposition bezogen auf den Ausleger 10 während der Neigungsverstellung verändern.

Die in Fig. 1 dargestellte Verbindung zwischen dem Stellzylinder 12 und dem Rahmen 11 bzw. dem Ausleger 10 kann variiert werden. Beispielsweise kann die Kolbenstange 14 am Ausleger 10 und das Gehäuse 15 des Stellzylinders 12 am Rahmen 11 mechanisch befestigt sein (kinematische Umkehr).

Bei dem Ausführungsbeispiel gemäß Fig. 1 ist die Kolbenstange 14 direkt an der Vertikalstrebe 28 des Rahmens 11 befestigt. Es ist auch möglich, zwischen die Kolbenstange 14 und die Vertikalstrebe 28 ein starres Zwischenstück einzusetzen, um den Abstand zwischen dem Stellzylinder 12 und dem Rahmen 11 zu verkürzen, wenn dies erforderlich ist. Auch in diesem Fall erfolgt die Krafteinleitung bzw. die Kraftübertragung vom Rahmen 11 auf den Ausleger 10 durch den Stellzylinder 12 direkt bzw. federlos. Dasselbe gilt für etwaige starre Zwischenstücke zwischen dem Ausleger 10 und dem Gehäuse 15 des Stellzylinders 12.

Wie in Fig. 1 weiter gezeigt, ist der Stellzylinder 12 mit einem Hydraulikkreislauf 16 verbunden. Bei dem Hydraulikkreislauf 16 handelt es sich um einen offenen Kreislauf, der ein Hydraulikreservoir 25 und eine Pumpe 17 umfasst. Zwischen der Pumpe 17 und dem Hydraulikreservoir 25 einerseits und dem Stellzylinder 12 andererseits ist ein Schaltorgan 18 angeordnet. Das Schaltorgan 18 verbindet die Pumpe 17 bzw. das Hydraulikreservoir 25 mit den beiden Druckseiten 20, 22 des Stellzylinders 12. Dazu sind entsprechende erste und zweite Leitungen 19, 21 zwischen dem Stellzylinder 12 und dem Schaltorgan 18 vorgesehen.

Bei dem Schaltorgan handelt es sich um ein Proportional-Wegeventil, das in einer ersten Schaltstellung die erste Druckseite 20 mit der Pumpe 17 und die zweite Druckseite 22 mit dem Reservoir 25 verbindet. In der zweiten Schaltstellung verbindet das Schaltorgan 18 die zweite Druckseite 22 mit der Pumpe 17 und die erste Druckseite 20 mit dem Reservoir 25. In der in Fig. 1 dargestellten Nullstellung sind die Pumpe 17 und das Reservoir 25 vom Stellzylinder 12 hydraulisch getrennt.

Das Schaltorgan 18, konkret das Ventil, ist mit einer Frequenz von mindestens 15 Hz, insbesondere von mindestens 20 Hz, insbesondere von mindestens 25 Hz, insbesondere von mindestens 30 Hz betätigbar.

Wie in Fig. 1 weiter zu erkennen, weist das Gehäuse 15 zwei Druckspeicher 23, 24 auf, die direkt an das Gehäuse im Bereich der ersten und zweiten Druckseite 20, 22 angeflanscht sind. Die beiden Druckspeicher 23, 24 dienen dazu, Druckspitzen abzufangen. Eine andere Anordnung der Druckspeicher 23, 24 ist möglich. Allgemein kommt es darauf an, dass die Druckspeicher 23, 24 zwischen dem Schaltorgan 18, konkret dem Ventil, und dem Stellzylinder 12 angeordnet sind. Die Druckspeicher 23, 24 können vom Bauraum auch näher am Schaltorgan 18 als an dem Stellzylinder 12 positioniert sein.

Das Mess- und Regelungssystem weist ferner Sensoren auf. So sind an der Unterseite des Auslegers auf beiden Seiten des Drehgelenks 26 Abstandssensoren, beispielsweise Ultraschallsensoren vorgesehen (nicht dargestellt). Konkret sind die Ultraschallsensoren an den Spitzen bzw. Längsenden des Auslegers angeordnet. Eine andere Anordnung ist möglich. Mit den Abstandssensoren werden Höhendifferenzen zwischen den Auslegerspitzen bezogen auf den Boden und/oder den Pflanzenbestand gemessen.

Zusätzlich weist das Mess- und Regelsystem zwei Drucksensoren 33 auf, die den Druck in den beiden Leitungen 19, 21 messen und entsprechende Signale ausgeben, die zusammen mit den Signalen der Abstandssensoren zur Regelung des Schaltorgans 18 verarbeitet werden. Konkret sind die beiden Drucksensoren 33 zwischen den Druckspeichern 23, 24 und dem Schaltorgan 18 angeordnet. Bei der Verwendung von Druckregelventilen als Schaltorgane 18 erfolgt die Steuerung des Drucks mittels der Kennlinien der betreffenden Ventile. Die Drucksensoren sind dann nicht zwingend erforderlich, können aber zur Verbesserung der Präzision der Regelung eingesetzt werden.

Die Signale der Drucksensoren ermöglichen eine aktive Schwingungsdämpfung im Rahmen der Regelung. Aufgrund des variablen Ölvolumens im Hydraulikkreislauf ist allerdings keine Gestängeposition aufgrund des Öldrucks bestimmbar, was für die Regelung auch nicht erforderlich ist. Weitere Sensoren zur Messung von Parametern, die in die Regelung eingehen, bspw. ein Drehratensensor zur Messung der Drehrate des Auslegers, können vorgesehen sein.

Das in Fig. 1 dargestellte Ausführungsbeispiel wird im Zusammenhang mit dem Hydrauliksystem gemäß Fig. 2 offenbart, das den Stellzylinder 12 und das erste Schaltorgan 18 gemäß Fig. 1 zeigt.

Zwischen der in Fig. 1 dargestellten Pumpe und dem Schaltorgan 18 ist bei der Kombination mit dem Hydrauliksystem gemäß Fig. 2 die Druckleitung für den Hubzylinder 34 gemäß Fig. 2 angeschlossen. Entsprechendes gilt für die Rückführleitung, die in das Reservoir 25 mündet. Das in Fig. 2 dargestellte Hydrauliksystem umfasst eine Pump- bzw. Druckleitung, die mit zwei Hubzylindern 34 verbunden ist. Es ist auch möglich, anstelle der beiden Hubzylinder 34 einen einzigen bzw. mehr als zwei Hubzylinder 34 zu verwenden.

Zusätzlich zu dem bzw. zu den Hubzylindern 34 für den Hub in vertikaler Richtung können ein oder mehrere Hubzylinder vorgesehen sein, mit denen ein Teil des Auslegers 10 verschwenkt wird, wobei ein Auslegersegment an- oder abgewinkelt wird (nicht dargestellt). Davon zu unterscheiden ist die Neigungsverstellung des gesamten Auslegers, die durch den Stellzylinder 12 erfolgt.

Das im Zusammenhang mit den Hubzylindern 34 beschriebene allgemeine Prinzip der Abschaltung einer Teilfunktion (Absenken) oder der Verlangsamung der Teilfunktion (Absenken) durch Drosselung ist auf mögliche Hubzylinder zum Klappen bzw. Anstellen der Auslegersegmente entsprechend anwendbar.

Die Hubzylinder 34 sind als einfach wirkende Zylinder ausgebildet. Die Verwendung von doppeltwirkenden Zylindern ist mit einer entsprechend angepassten Ventilschaltung ebenfalls möglich.

In der Druckleitung für die Hubzylinder 34 ist ein zweites Schaltorgan 35 angeordnet, beispielsweise in der Form eines Mehrwegeventils. Den Hydraulikzylindern 34 sind Druckspeicher (nicht dargestellt) zugeordnet. Diese können wie die Druckspeicher 23, 24 am Stellzylinder 12 oder in der Druckleitung angeordnet sein. Auf die obige Beschreibung hierzu wird verwiesen.

Zwischen den beiden Hubzylindern 34 und dem zweiten Schaltorgan 35 ist ein Rückschlagventil 38 in der Druckleitung angeordnet. Zwischen der Pumpe 17 und dem zweiten Schaltorgan 35 ist ein Messumformer 40, sowie diesem in Strömungsrichtung vorgeordnet, ein Hydraulikspeicher 41 und, diesem in Strömungsrichtung vorgeordnet, ein zweites Rückschlagventil 39 angeordnet. In der Rückführleitung ist ein drittes Schaltorgan 36 angeordnet.

Die Maschine weist ferner ein Mess- und Regelsystem mit einer Steuereinheit auf (nicht dargestellt), die mit dem dritten Schaltorgan 35 verbunden ist. Die Steuereinheit bzw. allg. das Mess- und Regelsystem ist so ausgebildet, dass das dritte Schaltorgan 36 geschlossen wird bzw. deaktiviert wird, wenn im Hydraulikkreislauf 16 ein Grenzdruck unterschritten wird, der in der Steuereinheit voreingestellt ist. Der Druck wird mit dem Sensor bzw. Messumformer 40 erfasst.

Wenn das Schaltorgan 36 geschlossen ist und damit die Hydraulikflüssigkeit sperrt, können die beiden Hubzylinder 34 nicht mehr abgesenkt, sondern nur noch durch Betätigen des zweiten Schaltorgans 35 angehoben werden. Dadurch vergrößert sich der Abstand zwischen dem Ausleger und dem Boden bzw. Bestand. Das zweite Schaltorgan 35 wird somit von dem Mess- und Regelsystem nur noch betätigt, wenn trotzdem der Abstand zwischen dem Boden bzw. Bestand und dem Ausleger zu gering ist. Dadurch benötigt die Höhenregelung deutlich weniger Energie. Der Neigungsregelung, die durch das erste Schaltorgan 18 betätigt wird, steht somit eine wesentlich größere Menge an Hydraulikflüssigkeit zur Verfügung, um das Gestänge parallel zur Zielfläche auszurichten.

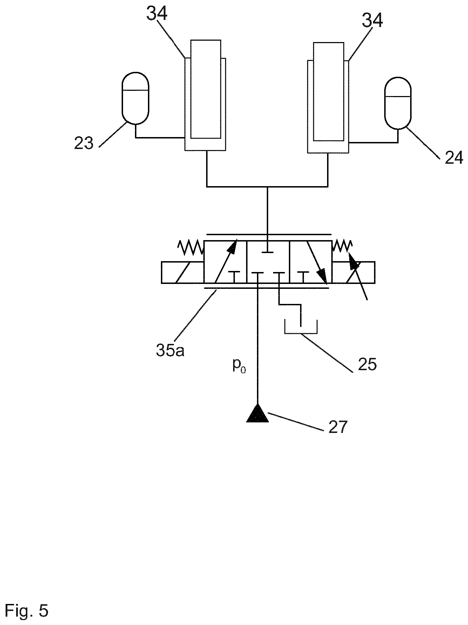

Eine Alternative des für die Hubfunktion vorgesehenen Teils des Hydrauliksystems gemäß Fig. 2 ist in Fig. 5 gezeigt. Demnach kann anstelle des zweiten und dritten Schaltorgans 35, 36 ein einziges Schaltorgan 35a als weiteres Schaltorgan vorgesehen sein, das sowohl die Auf- als auch die Abwärtsbewegung des Auslegers 10 steuert. Das einzige Schaltorgan 35a kann ein 3/3Wegeventil sein, bei dem im Sicherheitsbetrieb die Schaltstellung zum Absenken des bzw. der Hubzylinder 34 nicht verwendet wird. In Fig. 5 sind die Druckspeicher 23, 24 an den Hubzylindern 34 gezeigt, die auch bei dem Beispiel gemäß Fig. 2 vorgesehen sein können. Andere Anordnungen der Druckspeicher 23, 24 sind möglich.

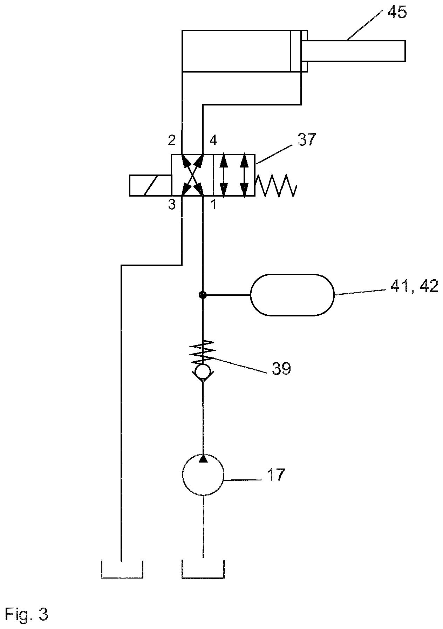

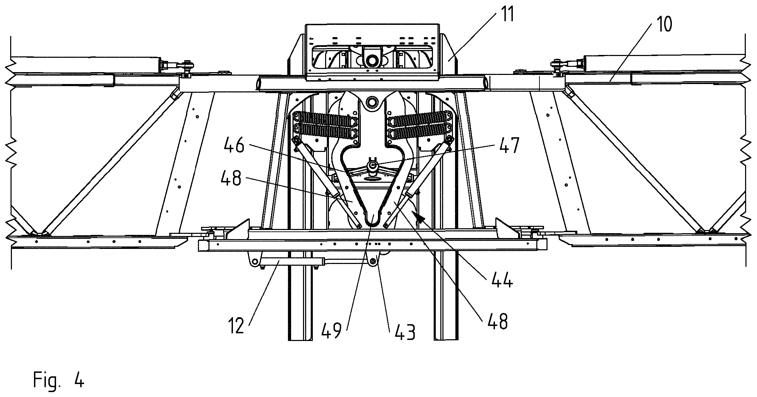

Bei einem weiteren Ausführungsbeispiel kann die Maschine mit einem redundanten mechanischen Sicherheitssystem ausgerüstet sein, wie in den Fig. 3 und 4 dargestellt. Dabei ist die mechanische Aufhängung dahingehend modifiziert, dass der Hubrahmen 11 einen Zwischenrahmen 43 aufweist, der drehbar um eine in Fahrtrichtung weisende Drehachse gelagert ist. Der Zwischenrahmen 43 kann mit dem Rahmen 11 fest verriegelt werden. Dazu ist ein Riegelelement 46 vorgesehen, das beweglich mit dem Rahmen 11 verbunden ist und in der Schließstellung in den Zwischenrahmen 43 eingreift. Das Riegelelement kann, wie in Fig. 4 dargestellt, im Tragrahmen 11 in zwei Linearführungen höhenbeweglich gelagert sein. In der Mitte des Riegelelements 46 ist ein Kopf 47, beispielsweise in der Form einer Kugel vorgesehen, die in eine korrespondierende Ausnehmung im Zwischenelement 43 in der Schließstellung eingreift.

Das Zwischenelement 43 weist bei dem Ausführungsbeispiel gemäß Fig. 4 zwei Arme 48 auf. Die Arme verjüngen sich V-förmig in Richtung der korrespondierenden Ausnehmung 49. Zwischen den Armen 48 ist der Kopf 47 angeordnet. Wenn das Zwischenelement 43 aus einem ausgelenkten Zustand heraus verriegelt werden soll, schlägt der Kopf 47 an den Armen 48 an und zwingt das Zwischenelement 43 beim Verriegeln in die Mittenlage.

Als redundantes Sicherheitssystem ist ein passives Federdämpfersystem 44 vorgesehen, das einerseits mit dem Zwischenrahmen 43 und andererseits mit dem Rahmen 11 verbunden ist. Das Feder-Dämpfersystem 44 hat keinen eigenen Antrieb, weil der Stellzylinder 12 und das Feder-Dämpfersystem 44 mechanisch entkoppelt sind und zwar durch den Zwischenrahmen 43. Dazu ist der Zwischenrahmen 43 im Normalbetrieb mit dem Rahmen 11 verriegelt, so dass das Feder-Dämpfersystem 44 inaktiv ist. Die Neigungsverstellung erfolgt ausschließlich durch den Stellzylinder 12. Zum Aktivieren des passiven Feder-Dämpfersystems 44 wird der Zwischenrahmen 43 entriegelt, so dass dieser relativ zum Rahmen 11 drehen kann. Dabei wird das Feder-Dämpfersystem 44 betätigt und bewirkt eine Drehung des Auslegers um die Drehachse.

Bei dem Beispiel gemäß Fig. 4 weist das Feder-Dämpfersystem 44 zwei Dämpfer und vier Federn auf, die symmetrisch an beiden Seiten des Zwischenrahmens 43 angreifen. Eine andere Anzahl bzw. eine unsymmetrische Anordnung der Federn bzw. der Dämpfer ist möglich.

Die Entriegelung bzw. Verriegelung des Zwischenrahmens 43 erfolgt durch ein Betätigungselement 45, das in Fig. 3 dargestellt ist. Dabei handelt es sich um einen Stellzylinder, der am Riegelelement 46 angreift und dieses entlang des Rahmens 11 verschiebt. Eine andere Mechanik zur Verriegelung bzw. Entriegelung des Zwischenelements 43 ist möglich.

Das Betätigungselement 45 ist entweder mit dem Hydraulikkreislauf 16 gemäß Fig. 2 oder mit einem separaten Hydraulikkreislauf hydraulisch verbunden. Der Hydraulikkreislauf 16 bzw. der separate Hydraulikkreislauf weist ein viertes Schaltorgan 37 auf, mit dessen Hilfe das Betätigungselement 45 angesteuert wird. Zur Sicherheit, für den Fall, dass der Druck im Hydraulikkreislauf nicht ausreicht, um das Betätigungselement zum Entriegeln des Zwischenrahmens 43 zu betätigen, ist ein Hydraulikspeicher 41 bzw. ein zweiter Hydraulikspeicher 42 vorgesehen, der mit einem Rückschlagventil 39 abgesichert ist.

## Patentansprüche

1. Landwirtschaftliche Maschine zum Ausbringen von Flüssigkeit und/oder pulver- oder granulatförmigen Materialien mit
- einem Ausleger (10),
- einem Rahmen (11), an dem der Ausleger (10) um eine in Fahrtrichtung weisende Drehachse drehbar befestigt ist,
- wenigstens einem Hubzylinder (34) zum Anheben und Absenken des Auslegers (10) und/oder zum Anwinkeln und Abwinkeln eines Auslegersegmentes,
- einem Stellzylinder (12) zur Drehung des Auslegers (10) um die Drehachse und
- einem Mess- und Regelsystem für die Betätigung des Stellzylinders (12) und des Hubzylinders (34),
wobei der Stellzylinder (12) einerseits mit dem Rahmen (11) mechanisch verbunden oder verbindbar ist, wobei
- der Stellzylinder (12) andererseits mit dem Ausleger (10) zur direkten Krafteinleitung mechanisch verbunden ist,
- der Stellzylinder (12) als doppeltwirkender Stellzylinder (12) mit einem Kolben (13) ausgebildet ist, der beidseitig mit Druck zur Bewegung des Auslegers (10) in entgegengesetzten Drehrichtungen beaufschlagbar ist,
**dadurch gekennzeichnet, dass**
- der Stellzylinder (12) und der Hubzylinder (34) mit einem Hydraulikkreislauf (16), insbesondere einem offenen Hydraulikkreislauf (16), hydraulisch verbunden sind,
- der Hydraulikkreislauf (16) ein erstes Schaltorgan (18) zum Ansteuern des Stellzylinders (12) und wenigstens ein weiteres Schaltorgan, insbesondere ein zweites und drittes Schaltorgan (35, 36), zum Ansteuern des Hubzylinders (34) aufweist und
- das Mess- und Regelsystem zumindest mit dem weiteren Schaltorgan verbunden und so programmiert ist, dass das weitere Schaltorgan den Durchfluss an Hydraulikflüssigkeit drosselt oder geschlossen wird, wenn ein Grenzwert erreicht wird.

2. Maschine nach Anspruch 1, **dadurch gekennzeichnet, dass**
der Hubzylinder (34) durch das zweite Schaltorgan (35) zum Anheben des Auslegers (10) und/oder zum Anwinkeln des Auslegersegmentes und durch das dritte Schaltorgan (36) zum Absenken des Auslegers (10) und/oder zum Abwinkeln des Auslegersegmentes ansteuerbar ist, wobei die Steuereinheit so programmiert ist, dass das dritte Schaltorgan (36) den Durchfluss an Hydraulikflüssigkeit drosselt oder geschlossen wird, wenn ein Grenzwert erreicht wird.

3. Maschine nach Anspruch 1 oder 2, **dadurch gekennzeichnet, dass** ein Rückschlagventil (38) zwischen dem Hubzylinder (34) und dem weiteren Schaltorgan angeordnet oder in das weitere Schaltorgan integriert ist.

4. Maschine nach einem der vorhergehenden Ansprüche, **dadurch gekennzeichnet, dass** dem weiteren Schaltorgan ein Messumformer (40) und/oder ein Hydraulikspeicher (41) und/oder eine oder mehrere Hydraulikkomponenten in Strömungsrichtung vorgeordnet ist.

5. Maschine nach einem der vorhergehenden Ansprüche, **dadurch gekennzeichnet, dass** der Stellzylinder (12) mit dem Rahmen direkt verbunden oder mit dem Rahmen durch einen Zwischenrahmen (43) verbindbar ist, der um eine in Fahrtrichtung weisende Drehachse drehbar und mit dem Rahmen verriegelbar ist.

6. Maschine nach einem der vorhergehenden Ansprüche, **dadurch gekennzeichnet, dass** ein passives Feder-Dämpfersystem (44) zur Drehung des Auslegers (10) um die Drehachse als Sicherheitssystem vorgesehen ist, das bei Erreichen eines Grenzwertes aktivierbar ist.

7. Maschine nach Anspruch 6, **dadurch gekennzeichnet, dass** das passive Feder-Dämpfersystem (44) den Zwischenrahmen (43) und den Rahmen verbindet, wobei der Zwischenrahmen (43) mit dem Rahmen verriegelbar und zum Aktivieren des Feder-Dämpfersystems (44) entriegelbar ist.

8. Maschine nach Anspruch 6 oder 7, **dadurch gekennzeichnet, dass** ein Betätigungselement (45) zum Verriegeln und Entriegeln des Zwischenrahmens mit dem Hydraulikkreislauf (16) oder einem separaten Hydraulikkreislauf hydraulisch verbunden ist, wobei der Hydraulikkreislauf (16) oder der separate Hydraulikkreislauf ein weiteres Schaltorgan, insbesondere ein viertes Schaltorgan (37), zum Ansteuern des Betätigungselements (45) aufweist.

9. Maschine nach Anspruch 8, **dadurch gekennzeichnet, dass** ein Hydraulikspeicher (42) und ein Rückschlagventil auf der Druckseite des Betätigungselements (45) angeordnet sind.

10. Landwirtschaftliche Maschine zum Ausbringen von Flüssigkeit und/oder pulver- oder granulatförmigen Materialien mit
- einem Ausleger (10),
- einem Rahmen (11), an dem der Ausleger (10) um eine in Fahrtrichtung weisende Drehachse drehbar befestigt ist,
- wenigstens einem Hubzylinder (34) zum Anheben und Absenken des Auslegers (10) und/oder zum Anwinkeln und Abwinkeln eines Auslegersegmentes,
- einem Stellzylinder (12) zur Drehung des Auslegers (10) um die Drehachse und
- einem Mess- und Regelsystem für die Betätigung des Stellzylinders (12) und des Hubzylinders (34),
wobei der Stellzylinder (12) einerseits mit dem Rahmen (11) mechanisch verbunden oder verbindbar ist,
**dadurch gekennzeichnet, dass**
- der Stellzylinder (12) mit dem Rahmen (11) durch einen Zwischenrahmen (43) verbindbar ist, wobei der Zwischenrahmen (43) um eine in Fahrtrichtung weisende Drehachse drehbar ist,
- der Stellzylinder (12) andererseits mit dem Ausleger (10) zur direkten Krafteinleitung mechanisch verbunden ist,
- der Stellzylinder (12) als doppeltwirkender Stellzylinder (12) mit einem Kolben (13) ausgebildet ist, der beidseitig mit Druck zur Bewegung des Auslegers (10) in entgegengesetzten Drehrichtungen beaufschlagbar ist, und
ein passives Feder-Dämpfersystem (44) zur Drehung des Auslegers (10) um die Drehachse als Sicherheitssystem vorgesehen ist, das bei Erreichen eines Grenzwertes aktivierbar ist,
wobei das passive Feder-Dämpfersystem (44) den Zwischenrahmen (43) und den Rahmen (11) verbindet, wobei der Zwischenrahmen (43) mit dem Rahmen verriegelbar und zum Aktivieren des Feder-Dämpfersystems (44) entriegelbar ist.

11. Sicherheitsverfahren für den Betrieb einer landwirtschaftlichen Maschine zum Ausbringen von Flüssigkeit oder pulver- oder granulatförmigen Materialien mit
- einem Ausleger (10),
- einem Rahmen (11), an dem der Ausleger (10) um eine in Fahrtrichtung weisende Drehachse drehbar befestigt ist,
- einem Stellzylinder (12) zur Drehung des Auslegers (10) um die Drehachse und wenigstens einem Hubzylinder (34) zum Anheben und Absenken des Auslegers (10) und/oder zum Anwinkeln und Abwinkeln eines Auslegersegmentes;
- einem Mess- und Regelsystem für die Betätigung des Stellzylinders (12) und des Hubzylinders (34),
bei dem der Hubzylinder (34) mit einer gedrosselten Menge an Hydraulikflüssigkeit betrieben oder zumindest eine Teilfunktion des Hubzylinders (34) deaktiviert wird, wenn ein Grenzwert erreicht wird.

12. Verfahren nach Anspruch 11, **dadurch gekennzeichnet, dass** die Absenkfunktion und/oder die Abwinkelfunktion des Hubzylinders (34) deaktiviert oder verlangsamt wird, wenn ein Grenzwert erreicht wird.

## Claims

1. An agricultural machine for applying liquid and/or powdered or granular materials comprising:
- a boom (10),
- a frame (11) to which the boom (10) is attached so as to be rotatable about an axis of rotation pointing in the direction of travel,
- at least one lifting cylinder (34) for lifting and lowering the boom (10) and/or for tilting a boom segment upwards and downwards,
- an actuating cylinder (12) for rotating the boom (10) about the axis of rotation, and
- a measurement and control system for operating the actuating cylinder (12) and the lifting cylinder (34),
wherein the actuating cylinder (12) is, on the one hand, mechanically connected or connectable to the frame (11), and wherein
- the actuating cylinder (12) is, on the other hand, mechanically connected to the boom (10) for directly applying force,
- the actuating cylinder (12) is designed as a double-acting actuating cylinder (12) having a piston (13) which can be pressurized on both sides for moving the boom (10) in opposite directions of rotation,
**characterized in that**
- the actuating cylinder (12) and the lifting cylinder (34) are hydraulically connected to a hydraulic circuit (16), in particular an open hydraulic circuit (16),
- wherein the hydraulic circuit (16) includes a first switching member (18) for controlling the actuating cylinder (12) and at least one further switching member, in particular second and third switching members (35, 36), for controlling the lifting cylinder (34), and
- wherein the measurement and control system is connected at least to the further switching member and is programmed to cause the further switching member to reduce the flow of hydraulic fluid or be closed upon reaching a threshold.

2. The machine according to claim 1, **characterized in that** the lifting cylinder (34) is controlled by the second switching member (35) for raising the boom (10) and/or for inclining the boom segment upwards and by the third switching member (36) for lowering the boom (10) and/or for angling the boom segment downwards, wherein the control unit is programmed to cause the third switching member (36) to reduce the flow of hydraulic fluid or be closed upon reaching a threshold.

3. The machine according to claim 1 or 2, **characterized in that** a check valve (38) is arranged between the lifting cylinder (34) and the further switching member or is integrated into the further switching member.

4. The machine according to any one of the preceding claims, **characterized in that** the further switching member is preceded by a transducer (40) and/or a hydraulic accumulator (41) and/or one or more hydraulic component/s in the direction of flow.

5. The machine according to any one of the preceding claims, **characterized in that** the actuating cylinder (12) is directly connected to the frame or can be connected to the frame via an intermediate frame (43) which can be rotated about an axis of rotation pointing in the direction of travel and can be locked to the frame.

6. The machine according to any one of the preceding claims, **characterized in that** a passive spring damping system (44) for rotating the boom (10) about the axis of rotation is provided as a safety system which can be activated upon reaching a threshold.

7. The machine according to claim 6, **characterized in that** the passive spring damping system (44) connects the intermediate frame (43) and the frame, wherein the intermediate frame (43) can be locked to the frame and unlocked for activating the spring damping system (44).

8. The machine according to claims 6 or 7, **characterized in that** an actuating element (45) for locking and unlocking the intermediate frame is hydraulically connected to the hydraulic circuit (16) or a separate hydraulic circuit, wherein the hydraulic circuit (16) or the separate hydraulic circuit includes a further switching member, in particular a fourth switching member (37), for controlling the actuating element (45).

9. The machine according to claim 8, **characterized in that** a hydraulic accumulator (42) and a check valve are arranged on the pressure side of the actuating element (45).

10. An agricultural machine for applying liquid and/or powdered or granular materials comprising:
- a boom (10),
- a frame (11) to which the boom (10) is attached so as to be rotatable about an axis of rotation pointing in the direction of travel,
- at least one lifting cylinder (34) for lifting and lowering the boom (10) and/or for tilting a boom segment upwards and downwards,
- an actuating cylinder (12) for rotating the boom (10) about the axis of rotation, and
- a measurement and control system for operating the actuating cylinder (12) and the lifting cylinder (34),
wherein the actuating cylinder (12) is, on the one hand, mechanically connected or connectable to the frame (11),
**characterized in that**
- the actuating cylinder (12) can be connected to the frame (11) via an intermediate frame (43), wherein the intermediate frame (43) can be rotated about an axis of rotation pointing in the direction of travel,
- wherein the actuating cylinder (12) is, on the other hand, mechanically connected to the boom (10) for directly applying force,
- wherein the actuating cylinder (12) is designed as a double-acting actuating cylinder (12) having a piston (13) which can be pressurized on both sides for moving the boom (10) in opposite directions of rotation, and
a passive spring damping system (44) for rotating the boom (10) about the axis of rotation is provided as a safety system which can be activated upon reaching a threshold,
wherein the passive spring damping system (44) connects the intermediate frame (43) and the frame (11), and the intermediate frame (43) can be locked to the frame and unlocked for activating the spring damping system (44).

11. A safety method to operate an agricultural machine for applying liquid or powdery or granular materials comprising:
- a boom (10),
- a frame (11) to which the boom (10) is attached so as to be rotatable about an axis of rotation pointing in the direction of travel,
- an actuating cylinder (12) for rotating the boom (10) about the axis of rotation and at least one lifting cylinder (34) for raising and lowering the boom (10) and/or for tilting a boom segment upwards and downwards;
- a measurement and control system for operating the actuating cylinder (12) and the lifting cylinder (34),
in which the lifting cylinder (34) is operated with a reduced amount of hydraulic fluid or at least a partial function of the lifting cylinder (34) is deactivated upon reaching a threshold.

12. The method according to claim 11, **characterized in that** the lowering function and/or the downwards inclining function of the lifting cylinder (34) are/is deactivated or slowed down upon reaching a threshold.

## Revendications

1. Machine agricole pour l'épandage de liquide et/ou de matières en poudre ou en granulés ayant
- une rampe (10),
- un cadre (11) sur lequel la rampe (10) est fixée de manière à pouvoir tourner autour d'un axe de rotation orienté dans le sens du déplacement,
- au moins un vérin de levage (34) pour élever et abaisser la rampe (10) et/ou pour plier et déplier un segment de la rampe,
- un vérin de réglage (12) pour faire tourner la rampe (10) autour de l'axe de rotation et
- un système de mesure et de régulation pour l'actionnement du vérin de réglage (12) et du vérin de levage (34),
le vérin de réglage (12) est d'une part relié ou pouvant être relié mécaniquement au châssis (11), dans lequel
- le vérin de réglage (12) est relié mécaniquement d'autre part à la rampe (10) pour l'application directe de la force,
- le vérin de réglage (12) étant réalisé sous la forme d'un vérin de réglage (12) à double effet avec un piston (13) qui peut être alimenté en pression des deux côtés pour le déplacement de la rampe (10) dans des sens de rotation opposés,
**caractérisé en ce que**
- le vérin de réglage (12) et le vérin de levage (34) sont reliés hydrauliquement à un circuit hydraulique (16), en particulier un circuit hydraulique ouvert (16),
- le circuit hydraulique (16) présente un premier organe de commutation (18) pour la commande du vérin de réglage (12) et au moins un autre organe de commutation, en particulier un deuxième et un troisième organe de commutation (35, 36), pour la commande du vérin de levage (34) et
- le système de mesure et de régulation est relié au moins à l'autre organe de commutation et est programmé de telle sorte que l'autre organe de commutation restreint le débit du fluide hydraulique ou est fermé lorsqu'une valeur limite est atteinte.

2. Machine selon la revendication 1, **caractérisée en ce que** le vérin de levage (34) peut être commandé par le deuxième organe de commutation (35) pour élever la rampe (10) et/ou pour plier le segment de rampe et par le troisième organe de commutation (36) pour abaisser la rampe (10) et/ou pour déplier le segment de rampe, l'unité de commande étant programmée de telle sorte que le troisième organe de commutation (36) restreint le débit de liquide hydraulique ou est fermé lorsqu'une valeur limite est atteinte.

3. Machine selon la revendication 1 ou 2, **caractérisée en ce qu'**un clapet anti-retour (38) est disposé entre le vérin de levage (34) et l'autre organe de commutation ou est intégré dans l'autre organe de commutation.

4. Machine selon l'une des revendications précédentes, **caractérisée en ce qu'**un transducteur de mesure (40) et/ou un accumulateur hydraulique (41) et/ou un ou plusieurs composants hydrauliques sont disposés en amont de l'autre organe de commutation dans le sens de l'écoulement.

5. Machine selon l'une des revendications précédentes, **caractérisée en ce que** le vérin de réglage (12) est directement relié au châssis ou peut être relié au châssis par un châssis intermédiaire (43) qui peut tourner autour d'un axe de rotation orienté dans le sens du déplacement et qui peut être verrouillé avec le châssis.

6. Machine selon l'une des revendications précédentes, **caractérisée en ce qu'**il est prévu un système d'amortissement à ressort passif (44) pour la rotation de la rampe (10) autour de l'axe de rotation en tant que système de sécurité, qui peut être activé lorsqu'une valeur limite est atteinte.

7. Machine selon la revendication 6, **caractérisée en ce que** le système d'amortissement à ressort passif (44) relie le châssis intermédiaire (43) et le châssis, le châssis intermédiaire (43) pouvant être verrouillé au châssis et déverrouillé pour activer le système d'amortissement à ressort (44).

8. Machine selon la revendication 6 ou 7, **caractérisée en ce qu'**un élément d'actionnement (45) pour verrouiller et déverrouiller le châssis intermédiaire est relié hydrauliquement au circuit hydraulique (16) ou à un circuit hydraulique séparé, le circuit hydraulique (16) ou le circuit hydraulique séparé présentant un autre organe de commutation, en particulier un quatrième organe de commutation (37), pour commander l'élément d'actionnement (45).

9. Machine selon la revendication 8, **caractérisée en ce qu'**un accumulateur hydraulique (42) et un clapet anti-retour sont disposés du côté pression de l'élément d'actionnement (45).

10. Machine agricole pour l'épandage de liquide et/ou de matières en poudre ou en granulés ayant
- une rampe (10),
- un châssis (11) sur lequel la rampe (10) est fixée de manière à pouvoir tourner autour d'un axe de rotation orienté dans le sens du déplacement,
- au moins un vérin de levage (34) pour élever et abaisser la rampe (10) et/ou pour plier et déplier un segment de la rampe,
- un vérin de réglage (12) pour faire tourner la rampe (10) autour de l'axe de rotation et
- un système de mesure et de régulation pour l'actionnement du vérin de réglage (12) et du vérin de levage (34),
le vérin de réglage (12) étant relié ou pouvant être relié mécaniquement d'une part au châssis (11),
**caractérisé en ce que**
- le vérin de réglage (12) peut être relié au châssis (11) par un châssis intermédiaire (43), le châssis intermédiaire (43) pouvant tourner autour d'un axe de rotation orienté dans le sens du déplacement,
- le vérin de réglage (12) est relié mécaniquement d'autre part à la rampe (10) pour l'application directe de la force,
- le vérin de réglage (12) est réalisé sous la forme d'un vérin de réglage (12) à double effet avec un piston (13) qui peut être soumis des deux côtés à une pression pour le déplacement de la rampe (10) dans des sens de rotation opposés, et un système passif à ressort et amortisseur (44) pour la rotation de la rampe (10) autour de l'axe de rotation est prévu comme système de sécurité qui peut être activé lorsqu'une valeur limite est atteinte,
dans lequel le système d'amortisseur à ressort passif (44) relie le châssis intermédiaire (43) et le châssis (11), le châssis intermédiaire (43) pouvant être verrouillé sur le châssis et déverrouillé pour activer le système d'amortisseur à ressort (44).

11. Procédures de sécurité pour l'utilisation d'une machine agricole destinée à l'épandage de liquide ou de matières en poudre ou en granulés avec
- une rampe (10),
- un châssis (11) sur lequel la rampe (10) est fixée de manière à pouvoir tourner autour d'un axe de rotation orienté dans le sens du déplacement,
- un vérin de réglage (12) pour la rotation de la rampe (10) autour de l'axe de rotation et au moins un vérin de levage (34) pour l'élévation et l'abaissement de la rampe (10) et/ou pour plier et déplier un segment de la rampe ;
- un système de mesure et de régulation pour l'actionnement du vérin de réglage (12) et du vérin de levage (34),
dans lequel le vérin de levage (34) fonctionne avec une quantité restreinte de fluide hydraulique ou au moins une fonction partielle du vérin de levage (34) est désactivée lorsqu'une valeur limite est atteinte.

12. Procédé selon la revendication 11, **caractérisé en ce que** la fonction d'abaissement et/ou la fonction de dépliage du vérin de levage (34) est désactivée ou ralentie lorsqu'une valeur limite est atteinte.
